Europäisches Patentamt

European Patent Office

Office européen des brevets

(19)

(11) **EP 1 071 039 A1**

(12) **DEMANDE DE BREVET EUROPEEN**

(43) Date de publication:
**24.01.2001 Bulletin 2001/04**

(51) Int Cl.$^7$: **G06K 19/07**

(21) Numéro de dépôt: **00410078.0**

(22) Date de dépôt: **17.07.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **20.07.1999  FR 9909563**

(71) Demandeur: **STMicroelectronics SA**
**94250 Gentilly (FR)**

(72) Inventeurs:
• **Wuidart, Luc**
  **83910 Pourrieres (FR)**
• **Enguent, Jean-Pierre**
  **13119 Saint Savournin (FR)**

(74) Mandataire: **de Beaumont, Michel**
**1, rue Champollion**
**38000 Grenoble (FR)**

(54) **Dimensionnement d'un systéme à transpondeur électromagnétique pour un fonctionnement en hyperproximité**

(57)     L'invention concerne un système de transmission électromagnétique sans contact entre une borne comprenant un circuit oscillant série de génération d'un champ électromagnétique et un transpondeur comprenant un circuit oscillant parallèle (L2, C2), ces circuits oscillants étant dimensionnés pour que le coefficient (k) de couplage entre eux diminue fortement quand la distance (d) séparant le transpondeur de la borne devient supérieure à une valeur prédéterminée.

Fig 2

## Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou d'écriture. L'invention concerne, plus particulièrement, des transpondeurs dépourvus d'alimentation autonome. Ces transpondeurs extraient l'alimentation nécessaire aux circuits électroniques qu'ils comportent du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou de transpondeurs à lecture-écriture qui contiennent des données qui peuvent être modifiées par la borne.

Les systèmes utilisant des transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture.

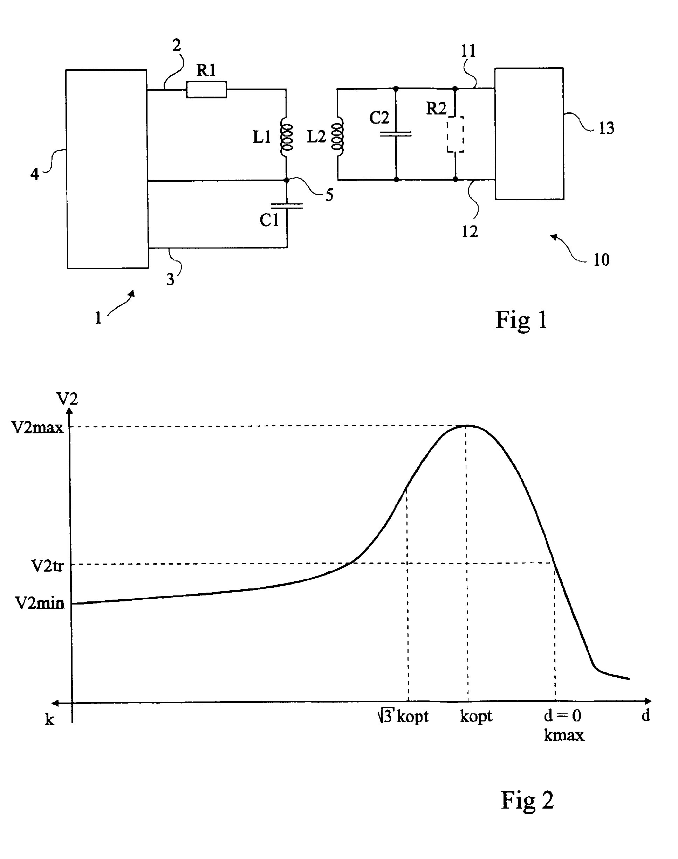

La figure 1 représente, de façon très schématique et simplifiée, un exemple classique de système d'échange de données entre une borne 1 de lecture-écriture et un transpondeur 10.

Généralement, la borne 1 est essentiellement constituée d'un circuit oscillant série, formé d'une inductance L1, en série avec un condensateur C1 et une résistance R1, entre une borne 2 de sortie d'un amplificateur ou coupleur d'antenne (non représenté) et une borne 3 de référence (généralement, la masse). Le coupleur d'antenne fait partie d'un circuit 4 de commande du circuit oscillant et d'exploitation des données reçues comprenant, entre autres, un modulateur-démodulateur et un microprocesseur de traitement des commandes et des données. Dans l'exemple représenté à la figure 1, le point 5 de connexion du condensateur C1 et de l'inductance L1 constitue une borne de prélèvement d'un signal de données reçu du transpondeur 10 à destination du démodulateur. Le circuit 4 de la borne communique généralement avec différents circuits d'entrée-sortie (clavier, écran, moyen de transmission vers un serveur, etc.) et/ou de traitement non représentés. Les circuits de la borne de lecture-écriture tirent l'énergie nécessaire à leur fonctionnement d'un circuit d'alimentation (non représenté) raccordé, par exemple, au réseau de distribution électrique.

Un transpondeur 10, destiné à coopérer avec une borne 1, comporte essentiellement un circuit oscillant parallèle formé d'une inductance L2, en parallèle avec un condensateur C2 entre deux bornes 11, 12 d'entrée d'un circuit 13 de commande et de traitement du transpondeur 10. Les bornes 11 et 12 sont, en pratique, reliées à l'entrée d'un moyen de redressement (non représenté) dont les sorties définissent des bornes d'alimentation continues des circuits internes au transpondeur. A la figure 1, la charge constituée par les circuits du transpondeur 10 sur le circuit oscillant a été modélisée par une résistance R2, représentée en pointillés, en parallèle avec l'inductance L2 et le condensateur C2.

Le circuit oscillant de la borne 1 est excité par un signal haute fréquence (par exemple, 13,56 MHz) destiné à être capté par un transpondeur 10. Quand le transpondeur 10 se trouve dans le champ de la borne 1, une tension haute fréquence est engendrée aux bornes 11, 12 du circuit résonnant du transpondeur. Cette tension, après redressement, est destinée à fournir la tension d'alimentation des circuits électroniques 13 du transpondeur. Ces circuits comprennent généralement, essentiellement, un microprocesseur, une mémoire, un démodulateur des signaux éventuellement reçus de la borne 1, et un modulateur pour transmettre des informations à la borne.

La transmission d'informations du transpondeur 10 vers la borne 1 s'effectue généralement en modifiant la charge du circuit oscillant L2, C2 de sorte que le transpondeur prélève une quantité d'énergie plus ou moins importante du champ magnétique haute fréquence. Cette variation est détectée, côté borne 1, dans la mesure où l'amplitude du signal d'excitation haute fréquence est maintenue constante. Par conséquent, une variation d'énergie du transpondeur se traduit par une variation d'amplitude et de phase du courant dans l'antenne L1. Cette variation est alors détectée, par exemple, par une mesure du signal de la borne 5, soit au moyen d'un démodulateur de phase, soit d'un démodulateur d'amplitude. La variation de charge côté transpondeur est généralement effectuée au moyen d'un interrupteur électronique de commande d'une résistance ou d'un condensateur modifiant la charge du circuit oscillant. L'interrupteur électronique est généralement commandé à une fréquence (par exemple, 847,5 kHz) dite sous-porteuse, nettement inférieure (généralement avec un rapport d'au moins 10) à la fréquence du signal d'excitation du circuit oscillant de la borne 1.

Dans le cas d'une démodulation de phase par la borne 1, son démodulateur détecte, dans les demi-périodes de la sous-porteuse où l'interrupteur électronique du transpondeur est fermé, un léger déphasage (quelques degrés, voire moins d'un degré) de la porteuse haute fréquence par rapport à un signal de référence. La sortie du démodulateur restitue alors un signal image du signal de commande de l'interrupteur électronique du transpondeur, qui peut être décodé pour restituer les données binaires transmises.

Pour obtenir un fonctionnement correct du système, les circuits oscillants de la borne 1 et du transpondeur 10 sont généralement accordés sur la fréquence de la porteuse, c'est-à-dire que leur fréquence de résonance est réglée sur la fréquence de, par exemple, 13,56 MHz. Cet accord a pour objet de maximiser le transfert d'énergie vers le transpondeur, généralement, une carte de format type carte de crédit intégrant les différents constituants du transpondeur.

Les domaines d'application des transpondeurs électromagnétiques (par exemple, des porte-monnaie électroniques, des cartes d'autorisation de passage prépayées, etc.) peuvent rendre souhaitable de garantir qu'un transpondeur ne fonctionne que dans une relation de distance prédéterminée avec une borne de lecture-écriture, plus précisément, en hyperproximité, c'est-à-dire une relation généralement définie par une distance, inférieure à 1 cm, séparant les antennes respectives du transpondeur et de la borne de lecture-écriture.

Par exemple, dans des applications telles que le porte-monnaie électronique, il est indispensable de garantir la sécurité des transactions et d'empêcher alors à un "pirate" de venir placer une borne de lecture parasite à proximité d'une borne autorisée, pour capter les informations des transpondeurs venant utiliser cette borne autorisée. Dans ce cas, on doit garantir qu'un transpondeur ne fonctionnera que dans une relation d'hyperproximité avec la borne.

Toutefois, dans les systèmes classiques, la téléalimentation des transpondeurs présente un "trou", c'est-à-dire une perte de puissance de téléalimentation lorsque le transpondeur est très près de la borne. Parmi les solutions actuelles pour résoudre ce problème, on force généralement un écart minimal entre les antennes L1 et L2, par exemple, en interposant une cale entre l'antenne L1 et la surface du boîtier devant laquelle doit passer le transpondeur. Un inconvénient de cette solution est que le couplage ne correspond alors plus réellement à de l'hyperproximité, ce qui rend le système particulièrement vulnérable au piratage en laissant une plage de portée disponible plus grande au "pirate".

Une autre solution connue est, pour un fonctionnement en hyperproximité, d'augmenter la résistance de rétromodulation du transpondeur. Le but est alors de rendre la rétromodulation invisible par la borne si le transpondeur est trop loin, la variation de charge devenant indécelable par le démodulateur de la borne. Un inconvénient de cette solution est que, en cas de borne pirate prévue pour être capable de fournir une énergie suffisante et pourvue d'un démodulateur très sensible, le transpondeur est alors visible, même de loin, par cette borne pirate.

La présente invention vise à proposer une solution au besoin de fonctionnement en hyperproximité des systèmes à transpondeur électromagnétique.

La présente invention vise, en particulier, à proposer une solution qui permette de dédier structurellement un transpondeur et/ou une borne à un fonctionnement en hyperproximité.

Plus généralement, l'invention vise à proposer une solution qui permette de dédier structurellement un transpondeur et/ou une borne à un fonctionnement dans une relation où les antennes sont à une distance inférieure à une valeur prédéterminée l'une de l'autre.

L'invention vise également à proposer une solution qui soit particulièrement simple à mettre en oeuvre pour le fabricant et qui soit fiable dans le temps.

Pour atteindre ces objets, la présente invention prévoit un transpondeur électromagnétique du type comprenant un circuit oscillant parallèle propre à être excité par un circuit oscillant série d'une borne de lecture-écriture lorsque le transpondeur entre dans le champ de la borne, caractérisé en ce que les composants du circuit oscillant du transpondeur sont dimensionnés pour que le coefficient de couplage entre les circuits oscillants respectifs de la borne et du transpondeur diminue rapidement quand la distance séparant le transpondeur de la borne devient supérieure à une valeur prédéterminée.

Selon un mode de réalisation de la présente invention, ladite valeur prédéterminée correspond à 1 centimètre.

Selon un mode de réalisation de la présente invention, le circuit oscillant du transpondeur est dépourvu de condensateur, la capacité parasite de l'inductance jouant le rôle d'élément capacitif du circuit oscillant.

Selon un mode de réalisation de la présente invention, une inductance du circuit oscillant parallèle est maximisée, un condensateur de ce circuit oscillant étant minimisé.

Selon un mode de réalisation de la présente invention, l'inductance L2 du circuit oscillant parallèle est choisie pour que la relation suivante soit respectée :

$$kopt = \sqrt{\frac{R1L2}{R2L1}},$$

où kopt représente le coefficient de couplage fournissant une tension maximale aux bornes du circuit oscillant parallèle, où R1 représente la résistance série du circuit oscillant série, où R2 représente la résistance équivalente du transpondeur ramenée en parallèle sur l'inductance L2, et où L1 représente l'inductance du circuit oscillant série.

Selon un mode de réalisation de la présente invention, les composants du circuit oscillant du transpondeur sont dimensionnés à partir d'un point de fonctionnement à distance nulle, choisi pour correspondre à un coefficient de couplage inférieur à un coefficient de couplage optimal respectant la relation suivante :

$$V2max(kopt) = \sqrt{\frac{R2}{R1}}\ \frac{Vg}{2},$$

où V2max représente la tension aux bornes du circuit oscillant parallèle pour le couplage optimal entre les circuits oscillants, où R1 représente la résistance série du circuit oscillant série, où R2 représente la résistance équivalente du transpondeur ramenée en parallèle sur son circuit oscillant, et où Vg représente la tension d'excitation du circuit oscillant série.

Selon un mode de réalisation de la présente invention, le nombre de spires de l'inductance du circuit oscillant du transpondeur est compris entre 5 et 15.

Selon un mode de réalisation de la présente invention, les valeurs respectives du condensateur et de l'inductance du circuit oscillant parallèle sont comprises entre 5 et 100 pf et entre 2 et 25 µH.

L'invention prévoit également une borne de génération d'un champ électromagnétique propre à coopérer avec au moins un transpondeur lorsque ce dernier entre dans ce champ, comprenant un circuit oscillant série de génération du champ électromagnétique, ce circuit oscillant série étant dimensionné pour que le coefficient de couplage entre les circuits oscillants respectifs de la borne et du transpondeur diminue fortement quand la distance séparant le transpondeur de la borne devient supérieure à une valeur prédéterminée.

Selon un mode de réalisation de la présente invention, les composants du circuit oscillant de la borne sont dimensionnés pour respecter les conditions de fonctionnement du transpondeur.

Selon un mode de réalisation de la présente invention, l'inductance du circuit oscillant de la borne comporte une seule spire.

L'invention concerne en outre un système de transmission électromagnétique sans contact entre une borne et un transpondeur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 décrite précédemment représente, de façon très schématique, une borne de lecture-écriture et un transpondeur électromagnétique du type auxquels s'applique la présente invention ; et
la figure 2 représente un exemple d'évolution de la tension aux bornes du circuit oscillant d'un transpondeur en fonction de la distance le séparant d'une borne.

Pour des raisons de clarté, seuls les éléments nécessaires à la compréhension de l'invention ont été représentés aux figures et seront décrits par la suite. En particulier, les circuits de commande et d'exploitation des circuits oscillants du transpondeur et de la borne n'ont pas été détaillés et ne font pas l'objet de la présente invention.

Une caractéristique de la présente invention est de prévoir un dimensionnement particulier du circuit oscillant d'un transpondeur électromagnétique pour que celui-ci soit structurellement dédié à un fonctionnement dans lequel il est à une distance inférieure à une valeur prédéterminée d'une borne de lecture-écriture, de préférence, en hyperproximité, c'est-à-dire à moins de 1 cm.

La notion de distance à laquelle fait référence la présente invention est la distance séparant les antennes respectives L1, L2 (figure 1) d'un transpondeur 10 et d'une borne 1.

La présente invention propose donc de placer, de préférence par les dimensionnements respectifs des circuits oscillants du transpondeur et de la borne, le point de fonctionnement du système pour garantir le fonctionnement de portée souhaité à la fréquence d'accord, c'est-à-dire lorsque les fréquences de résonance des circuits oscillants correspondent sensiblement à la fréquence de la porteuse de téléalimentation (par exemple, 13,56 MHz).

La figure 2 représente l'évolution de la tension V2 aux bornes 11, 12 du transpondeur en fonction de la distance d séparant le transpondeur d'une borne de lecture-écriture.

La courbe de la figure 2 peut également être considérée comme représentant l'évolution de la tension V2 en fonction du coefficient de couplage k entre les circuits oscillants du transpondeur et de la borne. En effet, le couplage entre les circuits oscillants est fonction de la distance qui sépare les antennes. Plus précisément, le coefficient de couplage k est, en première approximation, proportionnel à 1-d. Par conséquent, dans la description qui suit, on fera référence soit à la distance soit au coefficient de couplage comme abscisse de la caractéristique de la figure 2. L'axe des abscisses représente une distance d croissante vers la droite de la figure et un coefficient de couplage k croissant vers la gauche de la figure.

La tension V2 présente un maximum V2max pour une valeur optimale du coefficient de couplage kopt. Cette valeur correspond à la plus petite distance séparant les deux antennes pour laquelle la tension V2 est maximale lorsque la fréquence correspond à la fréquence de résonance des circuits oscillants. Cette valeur correspond, selon l'invention, à une distance courte. Pour une fréquence et un dimensionnement donnés fixant les conditions de fonctionnement, la tension V2 diminue de part et d'autre de la position de couplage optimal.

La courbe présente un point d'inflexion pour une valeur de couplage de kopt $\sqrt{3}$, c'est-à-dire pour une distance inférieure à la position de couplage optimal. Côté distances inférieures, la courbe tend vers une asymptote à une position de tension minimale V2min. Côté distances supérieures à la position de couplage optimal, la décroissance de la tension V2 est plus prononcée.

La relation qui lie le coefficient de couplage optimal kopt et les composants des circuits oscillants est la suivante :

$$kopt = \sqrt{\frac{R1L2}{R2L1}}.$$

Un coefficient de couplage k égal à l'unité correspond à la valeur limite théorique. Par conséquent, le coefficient kopt est, en pratique, toujours inférieur à 1.

Plus généralement, le coefficient de couplage k est donné par la formule $k = m/\sqrt{L1L2}$, où m représente la mutuelle inductance entre les circuits oscillants. Cette mutuelle inductance dépend, essentiellement, de la géométrie des antennes ou inductances L1 et L2.

Une caractéristique de la présente invention est de fixer, au moyen des valeurs respectives des composants des circuits oscillants, un point de fonctionnement en distance tel que, en s'écartant de ce point de fonctionnement, le coefficient de couplage entre les circuits oscillants diminue fortement.

Ainsi, pour un fonctionnement en hyperproximité, on dimensionnera les circuits oscillants pour que le point de couplage optimal kopt soit le plus possible vers la gauche de la figure, c'est-à-dire pour des distances faibles. Comme ce couplage optimal est théorique et inaccessible en pratique, on dispose alors, par le dimensionnement des circuits oscillants, de deux possibilités pour placer le point de fonctionnement réel en termes de couplage et de distance.

Selon la présente invention, on choisira que le point de distance nulle corresponde, tout en étant le plus près possible du point de couplage optimal, à un coefficient de couplage inférieur au coefficient optimal et adapté à la tension minimale requise V2tr pour le fonctionnement correct du transpondeur. Cela revient à placer un point de fonctionnement à distance nulle, à droite de la position de couplage optimal sur la figure 2. Ce point correspond à un couplage réel maximal kmax. Ce coefficient kmax dépend des géométries respectives des antennes L1 et L2 et est, bien entendu, compris entre 0 et 1. En pratique, on notera que le coefficient de couplage réel maximal kmax entre deux circuits oscillants n'excède généralement pas 0,7.

Un avantage est alors de se situer dans la partie de la caractéristique tension-distance qui est de forte pente. Ainsi, dès que la distance s'écarte du point de fonctionnement par augmentation de l'écart entre les deux circuits oscillants, le coefficient de couplage diminue fortement de sorte que le transpondeur n'est alors plus alimenté. On notera bien entendu que, la distance ne pouvant être négative, le point de fonctionnement fixé est alors le point pour lequel le couplage est maximal dans la configuration du système.

De préférence, le point de couplage réel maximal sera choisi de façon à ce que la tension V2 correspondante (V2(kmax)) soit légèrement supérieure à la tension minimale V2tr de fonctionnement du transpondeur. Par souci de simplification, on a indiqué à la figure 2 le niveau V2tr pour la position de couplage kmax. A titre d'exemple particulier de réalisation, si la tension V2tr est de 5 volts pour un coefficient kmax de 0,2, la tension V2 devient de 2,5 volts pour un coefficient k de 0,1.

De préférence, on choisit une valeur d'inductance L2 du transpondeur 10 la plus élevée possible pour avoir, à la fréquence de résonance (13,56 MHz), un condensateur C2 le plus petit possible, par exemple, de l'ordre de la dizaine de picofarads.

Un avantage d'un tel mode de réalisation est que le condensateur C2 est ainsi plus facile à intégrer.

Un autre avantage est que l'on diminue ainsi les courants réactifs qui sont source de dissipation dans le transpondeur 10.

On notera que, alors que dans les systèmes classiques on cherche à augmenter la valeur de l'inductance L2 du transpondeur pour augmenter la portée du système, l'invention prévoit, à l'inverse, d'augmenter cette inductance pour minimiser la portée de manière à obtenir un fonctionnement dédié en hyperproximité.

Le fait de rechercher une inductance L2 la plus grande possible va dans le sens de rechercher un couplage le plus élevé possible pour la distance nulle. De la même façon, on cherchera à minimiser la valeur de la résistance équivalente R2 pour toujours augmenter le coefficient de couplage en hyperproximité.

On notera que la recherche d'une inductance L2 la plus grande possible correspond à une augmentation du nombre de tours de cette inductance (par exemple, du nombre de tours conducteurs de l'antenne L2 réalisée sur la carte à puce formant le transpondeur). Cette augmentation du nombre de spires augmente la résistance parasite de l'inductance L2. Toutefois, l'augmentation de la résistance parasite série correspond, ramenée en parallèle sur le circuit oscillant, à une diminution de la résistance R2. Cela va donc dans le bon sens pour diminuer la résistance R2.

Un avantage de minimiser la valeur du condensateur C2 est que cela diminue le facteur de qualité du transpondeur. En effet, le facteur de qualité d'un circuit résonnant parallèle est égal à $\omega R2C2$, où $\omega$ représente la pulsation du circuit oscillant. Or, plus le facteur de qualité est faible, plus on peut augmenter le débit entre le transpondeur et la borne.

Une augmentation du débit améliore la sécurité du système par rapport à une borne de lecture pirate. En effet, un lecteur pirate se devra de disposer d'un facteur de qualité élevé pour essayer de capter les informations provenant du transpondeur alors qu'il ne sera pas en hyperproximité avec celui-ci. En ayant un facteur de qualité élevé, le lecteur pirate ne pourra pas lire les informations avec un débit élevé et, par conséquent, sera inefficace.

De plus, en diminuant le facteur de qualité côté transpondeur, on s'affranchit du problème de "trou" de téléalimentation des systèmes classiques en hyperproximité. En effet, le fonctionnement est alors plus proche de celui d'un transformateur.

Une caractéristique d'un mode de réalisation préféré de la présente invention est, pour minimiser la valeur de la capacité C2, de supprimer le recours à un condensateur en parallèle sur l'inductance L2 et de faire jouer le rôle de ce condensateur à la capacité parasite de l'inductance. Les inventeurs ont en effet constaté que cette capacité parasite constitue la valeur minimale et que cette valeur minimale varie peu avec les variations du nombre de spires de l'inductance. Par conséquent, on peut alors dimensionner l'inductance pour que sa fréquence de résonance propre corresponde à la fréquence de la porteuse. Par exemple, pour un transpondeur de format carte de crédit, une antenne de 10 tours sur la carte fournit une inductance de l'ordre de 13,5 $\mu$H, avec une capacité parasite d'une dizaine de picofarads. Un avantage de ce mode de réalisation est que l'on économise la surface nécessaire à la réalisation du condensateur. De plus, on supprime alors tout courant réactif.

Selon un mode de mise en oeuvre préféré de l'invention, la détermination des valeurs respectives des différents composants s'effectue de la manière suivante.

Tout d'abord, l'application et les besoins énergétiques du transpondeur fixent la tension V2tr qui doit être obtenue par téléalimentation. Pour une tension d'excitation donnée Vg du circuit oscillant de la borne, la tension V2 récupérée par le transpondeur est fonction des valeurs respectives de la résistance série R1 de la borne et de la résistance équivalente R2 du transpondeur en parallèle sur son circuit oscillant. La valeur de la résistance R2 peut être évaluée à partir des constituants (microprocesseur, régulateur, etc.) du transpondeur qui fixent le besoin de téléalimentation qui doit être préservé.

Au point de couplage optimal théorique kopt, la tension V2max est donnée par la relation suivante :

$$V2max(kopt) = \sqrt{\frac{R2}{R1}}\ \frac{Vg}{2}.$$

Plus généralement, la relation qui lie la tension V2 au coefficient de couplage k peut s'écrire :

$$V2(k) = \frac{kR2Vg\sqrt{\frac{L1}{L2}}}{R1 + k^2\frac{L1}{L2}R2}.$$

Après avoir déterminé la tension V2 qu'il faut obtenir aux bornes du condensateur C2, on dimensionne ce condensateur C2 à la valeur la plus faible possible pour faciliter son intégration.

Puis, on détermine l'inductance L2 du circuit oscillant en fonction de la fréquence de résonance souhaitée, à partir de la relation :

$$L2 = \frac{1}{C2\omega^2}.$$

Connaissant l'inductance L2, on peut déterminer la valeur qui doit être donnée à l'inductance de l'antenne L1 de la borne afin d'optimiser le système. La relation liant ces deux valeurs pour que la courbe de la figure 2 soit respectée est, à l'accord, c'est-à-dire pour un dimensionnement fixant la fréquence de résonance à la fréquence de la porteuse de téléalimentation :

$$L1 = \frac{R1L2}{R2k^2}.$$

De préférence, la valeur de l'inductance L1 est choisie la plus faible possible, c'est-à-dire en minimisant son nombre de spires. Ainsi, selon l'invention, le nombre de spires de la borne est relativement faible, de préférence 1, et le nombre de spires du transpondeur est relativement élevé, de préférence, compris entre 5 et 15 pour un format carte de crédit.

De préférence, un transpondeur de l'invention a recours à un redressement monoalternance de la tension V2. En effet, comme le système de l'invention est prévu pour fonctionner à moindre portée, l'énergie nécessaire est également moindre.

De préférence, la borne sera pourvue d'une résistance R1 la plus forte possible pour obtenir un couplage optimal (inférieur ou égal à 1) à une distance la plus petite possible.

A titre d'exemple particulier de réalisation, pour une fréquence de porteuse de 13,56 MHz et pour une valeur de 10 picofarads pour le condensateur C2, on utilisera une antenne L2 dont l'inductance est d'environ 13,5 microhenrys. Si le microprocesseur du transpondeur requiert une tension minimale de l'ordre de 4 volts pour fonctionner, on choisira une tension V2 d'environ 5 volts pour une position de distance nulle. Les fourchettes de valeur préférées sont, par exemple, un condensateur C2 de valeur donnée comprise entre 5 et 100 picofarads et une inductance L2 de valeur donnée comprise entre 2 et 25 microhenrys.

On notera que le fait de fixer structurellement les valeurs respectives des composants des circuits oscillants de la borne et du transpondeur n'est pas gênant. En effet, dans la plupart des applications, un type de transpondeur donné est dédié à une borne. En particulier, les caractéristiques de fonctionnement des systèmes à transpondeur électromagnétique font généralement l'objet de normes. Par conséquent, il n'est pas gênant de fixer de façon définitive les relations entre les circuits oscillants d'une borne et d'un transpondeur. A l'inverse, cela constitue un avantage de l'invention car on évite ainsi les risques d'intervention non autorisée sur le transpondeur en vue de le pirater.

Un avantage de la présente invention est qu'elle permet la réalisation de transpondeurs et de systèmes dédiés à un fonctionnement en hyperproximité.

Un autre avantage de la présente invention est qu'elle répond aux exigences de sécurité les plus sévères pour éviter le piratage d'un transpondeur.

Bien entendu, la présente invention est susceptible de diverses variantes et modifications qui apparaîtront à l'homme de l'art. En particulier, le choix des valeurs des composants des circuits oscillants est à la portée de l'homme de métier à partir des indications fonctionnelles et des relations données ci-dessus, en fonction de l'application et, en particulier, de la fréquence de la porteuse sur laquelle doivent être accordés ces circuits oscillants. De plus, on notera que l'invention n'altère pas les fonctionnements respectifs du transpondeur et de la borne pour ce qui est des circuits numériques de traitement.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellite, etc.) de cartes à puce sans contact (par exemple, les cartes d'identification pour contrôle d'accès, les cartes porte-monnaie électronique, les cartes de stockage d'informations sur le processeur de la carte, les cartes de fidélité de consommateurs, les cartes de télévision à péage, etc.) ainsi que de telles cartes à puce.

## Revendications

1. Transpondeur électromagnétique (10) du type comprenant un circuit oscillant parallèle (L2, C2) propre à être excité par un circuit oscillant série (R1, L1, C1) d'une borne (1) de lecture-écriture lorsque le transpondeur entre dans le champ de la borne, caractérisé en ce que les composants du circuit oscillant du transpondeur sont dimensionnés pour que le coefficient de couplage (k) entre les circuits oscillants respectifs de la borne et du transpondeur diminue rapidement quand la distance (d) séparant le transpondeur de la borne devient supérieure à une valeur prédéterminée.

2. Transpondeur électromagnétique (20) selon la revendication 1, caractérisé en ce que ladite valeur prédéterminée correspond à 1 centimètre.

3. Transpondeur électromagnétique (20) selon la revendication 1 ou 2, caractérisé en ce que son circuit oscillant est dépourvu de condensateur (C2), la capacité parasite de l'inductance (L2) jouant le rôle d'élément capacitif du circuit oscillant.

4. Transpondeur électromagnétique (10) selon la revendication 1 ou 2, caractérisé en ce qu'une inductance (L2) du circuit oscillant parallèle est maximisée, un condensateur (C2) de ce circuit oscillant étant minimisé.

5. Transpondeur électromagnétique (10) selon l'une quelconque des revendications 1 à 4, caractérisé en ce que l'inductance L2 du circuit oscillant parallèle (L2, C2) est choisie pour que la relation suivante soit respectée :

$$\text{kopt} = \sqrt{\frac{R1L2}{R2L1}},$$

où kopt représente le coefficient de couplage fournissant une tension maximale aux bornes du circuit oscillant parallèle, où R1 représente la résistance série du circuit oscillant série (L1, C1, R1), où R2 représente la résistance équivalente du transpondeur ramenée en parallèle sur l'inductance L2, et où L1 représente l'inductance du circuit oscillant série.

6. Transpondeur électromagnétique (10) selon l'une quelconque des revendications 1 à 5, caractérisé en ce que les composants de son circuit oscillant (L2, C2) sont dimensionnés à partir d'un point de fonctionnement à distance nulle, choisi pour correspondre à un coefficient de couplage (k) inférieur à un coefficient de couplage optimal (kopt) respectant la relation suivante :

$$\text{V2max(kopt)} = \sqrt{\frac{R2}{R1}} \, \frac{Vg}{2},$$

où V2max représente la tension aux bornes du circuit oscillant parallèle pour le couplage optimal entre les circuits oscillants, où R1 représente la résistance série du circuit oscillant série (L1, C1, R1), où R2 représente la résistance équivalente du transpondeur ramenée en parallèle sur son circuit oscillant, et où Vg représente la tension d'excitation du circuit oscillant série.

7. Transpondeur électromagnétique (10) selon l'une quelconque des revendications 1 à 6, caractérisé en ce que le nombre de spires de l'inductance (L2) de son circuit oscillant est compris entre 5 et 15.

8. Transpondeur électromagnétique (10) selon l'une quelconque des revendications 1 à 7, caractérisé en ce que les valeurs respectives du condensateur (C2) et de l'inductance (L2) de son circuit oscillant parallèle sont comprises entre 5 et 100 pf et entre 2 et 25 µH.

9. Borne (1) de génération d'un champ électromagnétique propre à coopérer avec au moins un transpondeur (10) lorsque ce dernier entre dans ce champ, comprenant un circuit oscillant série (L1, C1) de génération du champ électromagnétique, caractérisée en ce que ce circuit oscillant série est dimensionné pour que le coefficient (k) de couplage entre les circuits oscillants respectifs de la borne et du transpondeur diminue fortement quand la distance (d) séparant le transpondeur de la borne devient supérieure à une valeur prédéterminée.

10. Borne (1) selon la revendication 9, caractérisée en ce que les composants de son circuit oscillant (R1, C1, L1) sont dimensionnés pour respecter les conditions de fonctionnement d'un transpondeur (10) conforme à l'une quelconque des revendications 1 à 8.

11. Borne (1) selon la revendication 10, caractérisée en ce que l'inductance (L1) de son circuit oscillant série (L1, C1, R1) comporte une seule spire.

12. Système de transmission électromagnétique sans contact entre une borne (1) et un transpondeur (10), caractérisé en ce que le transpondeur est conforme à l'une quelconque des revendications 1 à 8, la borne étant conforme à l'une quelconque des revendications 10 ou 11.

Fig 1

Fig 2

**Office européen des brevets**

**RAPPORT DE RECHERCHE EUROPEENNE**

Numéro de la demande

EP 00 41 0078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 782 308 A (TROBEC FRANC ET AL) 1 novembre 1988 (1988-11-01) | 1,3,4, 9-12 | G06K19/07 |
| Y | * colonne 3, ligne 42-49; figure 1 * | 7,8 | |
| Y | EP 0 902 475 A (MICROCHIP TECH INC) 17 mars 1999 (1999-03-17) * colonne 4, ligne 11-16; figures 1-4 * | 7 | |
| Y | WO 99 33017 A (HADFIELD GEORGE ;ADVANCED TECHNOLOGY COMMUNICAT (GB)) 1 juillet 1999 (1999-07-01) * page 6, ligne 16 - page 7, ligne 5; figure 2 * | 8 | |
| A | DE 44 44 984 C (SIEMENS AG) 14 décembre 1995 (1995-12-14) * le document en entier * | 1-12 | |
| A | EP 0 267 009 A (MARS INC) 11 mai 1988 (1988-05-11) * page 2, ligne 48-57; figure 1 * | 1-12 | |

**DOMAINES TECHNIQUES RECHERCHES (Int.Cl.7)**

G06K

Le présent rapport a été établi pour toutes les revendications

| Lieu de la recherche | Date d'achevement de la recherche | Examinateur |
|---|---|---|
| LA HAYE | 19 octobre 2000 | Schauler, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou apres cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 00 41 0078

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-10-2000

| Document brevet cité au rapport de recherche | | Date de publication | Membre(s) de la famille de brevet(s) | | Date de publication |
|---|---|---|---|---|---|
| US 4782308 | A | 01-11-1988 | YU | 31487 A | 31-08-1989 |
| | | | YU | 34086 A | 31-12-1989 |
| | | | DE | 3707173 A | 10-09-1987 |
| EP 0902475 | A | 17-03-1999 | JP | 11177027 A | 02-07-1999 |
| WO 9933017 | A | 01-07-1999 | AU | 1770999 A | 12-07-1999 |
| DE 4444984 | C | 14-12-1995 | WO | 9618969 A | 20-06-1996 |
| EP 0267009 | A | 11-05-1988 | GB | 2197107 A | 11-05-1988 |
| | | | AT | 77163 T | 15-06-1992 |
| | | | DE | 3779723 A | 16-07-1992 |
| | | | DE | 3779723 T | 10-12-1992 |
| | | | ES | 2032451 T | 16-02-1993 |
| | | | WO | 8803684 A | 19-05-1988 |
| | | | US | 5013898 A | 07-05-1991 |

EPO FORM P0460

Pour tout renseignement concernant cette annexe : voir Journal Officiel de l'Office européen des brevets, No.12/82